# EUROPEAN PATENT SPECIFICATION

(11) **EP 3 173 610 B1**
(45) Date of publication and mention of the grant of the patent: **22.08.2018**
(21) Application number: 16200824.7
(22) Date of filing: 25.11.2016
(51) Int. Cl.: F02M 35/10

(54) **INTAKE PIPE FOR AN INTERNAL COMBUSTION ENGINE PROVIDED WITH A THERMOELECTRIC CONVERSION DEVICE AND INTERNAL COMBUSTION ENGINE PROVIDED WITH SUCH A PIPE**
VERBRENNUNGSMOTOR MIT EINER THERMOELEKTRISCHEN KÜHLVORRICHTUNG IM EINLASSKANAL
MOTEUR À COMBUSTION INTERNE AVEC UN DISPOSITIF DE REFROIDISSEMENT THERMOÉLECTRIQUE DANS LA CONDUITE D'ADMISSION.

(30) Priority: 26.11.2015 IT UB20155945
(43) Date of publication of application: 31.05.2017
(73) Proprietor: Magneti Marelli S.p.A., 20011 Corbetta (MI) (IT)
(72) Inventor: COLLI, Marcello, 42100 REGGIO EMILIA (IT); MUSOLESI, Stefano, 40122 BOLOGNA (IT)
(74) Representative: Studio Torta S.p.A.

(56) References cited:
- WO-A1-2012/067565
- JP-A- 2007 255 364
- US-A1- 2003 234 008
- US-A1- 2006 122 762
- US-B1- 6 817 197

## Description

### TECHNICAL FIELD

The present invention relates to an intake pipe for an internal combustion engine provided with a thermoelectric conversion device.

The present invention also relates to an internal combustion engine provided with an intake pipe comprising a thermoelectric conversion device.

### PRIOR ART

As is known, an internal combustion engine supercharged by means of a turbocharger supercharging system comprises a head defining a plurality of cylinders, each of which is connected to an intake manifold via at least one respective intake valve and to an exhaust manifold via at least one respective exhaust valve, and inside which the fuel is injected by an injector.

Each cylinder houses a respective piston mechanically connected via a connecting rod to a crankshaft so as to transmit to said crankshaft the force generated by the combustion inside the cylinder. Typically, the crankshaft also drives into rotation an alternator designed for converting the mechanical energy generated by the internal combustion engine into electrical energy required for the charging process of a battery of the vehicle. However, the alternator is a rather expensive, bulky and heavy component to drive into rotation, with negative effects on the overall performance of the internal combustion engine.

To solve this problem, it has been proposed to insert thermoelectric conversion devices in the engine compartment, which allow to recover the electric energy required for the charging process of the battery of the vehicle, while eliminating the alternator, which is a rather expensive and bulky component. The documents WO-A1-2012067565, US-A1-2003234008, US-B1-6817197, US-A1-2006122762 and JP-A-2007255364 describe internal combustion engines provided with respective thermoelectric conversion devices, which, however, are characterized by reduced efficiency.

### DESCRIPTION OF THE INVENTION

Object of the present invention is to provide an intake pipe for an internal combustion engine provided with a thermoelectric conversion device, said pipe allows to overcome the drawbacks of the state of the art and is, at the same time, easy to manufacture.

A further object of the present invention is to provide an internal combustion engine provided with an intake pipe comprising a thermoelectric conversion device, which allows to overcome the drawbacks of the state of the art and is, at the same time, easy to manufacture.

According to the present invention, a component for an internal combustion engine provided with a thermoelectric conversion device and an internal combustion engine provided with an intake pipe comprising a thermoelectric conversion device are provided, as claimed in the appended claims.

### BRIEF DESCRIPTION OF THE DRAWINGS

The present invention will now be described with reference to the accompanying drawings, which illustrate a non-limiting embodiment thereof, in which:
- Figure 1 is a schematic view of a supercharged internal combustion engine according to the present invention;
- Figure 2 is a plan view of a throttle valve of the internal combustion engine of Figure 1;
- Figure 3 is a perspective view of an intake manifold of the internal combustion engine of Figure 1; and
- Figures 4 and 5 are perspective views of a segment of an intake pipe of the internal combustion engine of Figure 1 according to the present invention.

### PREFERRED EMBODIMENTS OF THE INVENTION

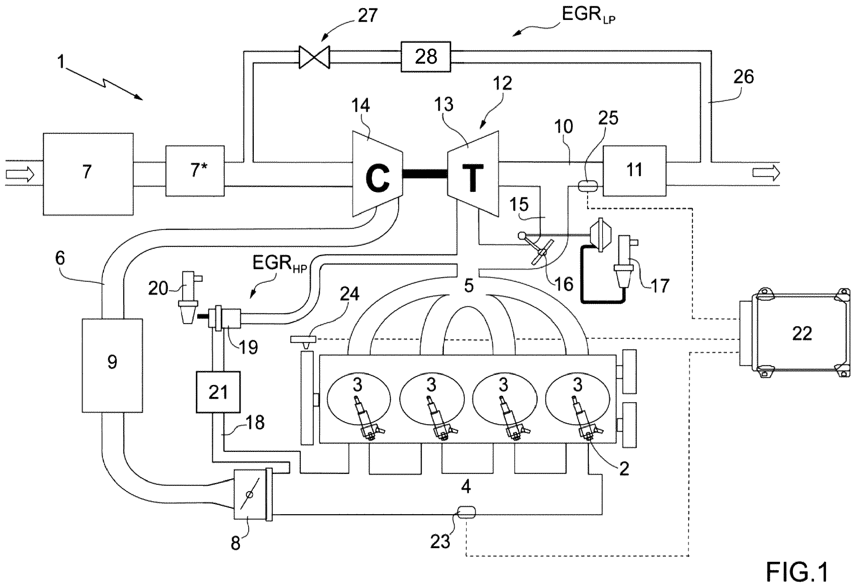

In Figure 1, numeral 1 indicates, as a whole, an internal combustion engine supercharged by means of a turbocharger supercharging system 2.

The internal combustion engine 1 comprises a number of cylinders 3 (in particular, Figure 1 shows four cylinders 3), each of which is connected to an intake manifold 4 via at least one respective intake valve (not shown) and to an exhaust manifold 5 via at least one respective exhaust valve (not shown). The intake manifold 4 receives fresh air (i.e. air from the external environment) through an intake pipe 6, which is provided with an air filter 7 and is controlled by a throttle valve 8. An intercooler 9, whose function is to cool the intake air, is arranged along the intake pipe 6. The exhaust manifold 5 is connected to an exhaust pipe 10 that feeds the exhaust gases produced by combustion to an exhaust system, which emits the gases produced by combustion into the atmosphere and normally comprises at least one catalyst 11 and at least one silencer (not shown) arranged downstream of the catalyst 11.

The supercharging system 2 of the internal combustion engine 1 comprises a turbocharger 12 provided with a turbine 13, which is arranged along the exhaust pipe 10 so as to rotate at high speed under the action of the exhaust gases expelled from the cylinders 3, and a supercharger 14, which is arranged along the intake pipe 6 and is mechanically connected to the turbine 13 to be driven into rotation by the turbine 13 itself, so as to increase the pressure of the air fed into the feeding pipe 6.

The exhaust pipe 10 is provided with a bypass pipe 15, which is connected in parallel to the turbine 13 so as to have its ends connected upstream and downstream of the turbine 13 itself; a wastegate valve 16 is arranged along the bypass pipe 15, the former being adapted to adjust the flow rate of the exhaust gases flowing through the bypass pipe 15 and controlled by an actuator 17.

The internal combustion engine 1 also comprises a high-pressure EGR_{HP} circuit which in turn comprises a bypass pipe 18 connected in parallel to the assembly formed by the cylinders 3, the intake manifold 4 and the exhaust manifold 5. A Poff valve 19 is arranged along the bypass pipe 18, the former being adapted to adjust the flow rate of the exhaust gases flowing through the bypass pipe 18 and controlled by an EGR solenoid valve 20. A heat exchanger 21, whose function is to cool the gases exiting the exhaust manifold 5, is arranged along the bypass pipe 18, downstream of the Poff valve 19.

The internal combustion engine 1 is controlled by an electronic control unit 22, which supervises the operation of all the components of the internal combustion engine 1. The electronic control unit 22 is connected to a sensor 23, which measures the temperature and the pressure of the gas mixture in the intake manifold 4, to a sensor 24, which measures the rotational speed of the internal combustion engine 1, and to a sensor 25 (typically, a UHEGO or UEGO oxygen linear sensor - of a known type and not described in detail), which measures the air/fuel ratio of the exhaust gases upstream of the catalyst 11.

The internal combustion engine 1 lastly comprises a low-pressure EGR_{LP} circuit, which in turn comprises a bypass pipe 26 provided along the exhaust pipe 10; the bypass pipe 26 is connected in parallel to the turbocharger 12. An EGR valve 27 is arranged along the bypass pipe 26, the former being adapted to adjust the flow rate of the exhaust gases flowing through the bypass pipe 26. A heat exchanger 28, whose function is to cool the gases exiting the exhaust manifold 5 and entering the supercharger 14, is also arranged along the bypass pipe 26, upstream of the valve 27. Alternatively, the low-pressure EGR_{LP} circuit comprises a three-way mixing device which is arranged at the intersection between the exhaust pipe 10 and the intake pipe 6, whose function is to adjust the mixing of the exhaust gases coming from the exhaust pipe 10 with the fresh air present in the intake pipe 6.

The low-pressure EGR_{LP} circuit originates from the exhaust pipe 10 downstream of the catalyst 11 so as to collect the exhaust gases, which have already been treated by the catalyst 11 itself and have a pressure only slightly higher than the atmospheric pressure; in this way, the recirculated exhaust gases from the bypass pipe 26 are "cleaner", i.e. they have a smaller amount of pollutants. This configuration is also referred to as "Long-Route" EGR, since the bypass pipe 26 must be longer than normal to get downstream of the catalyst 11.

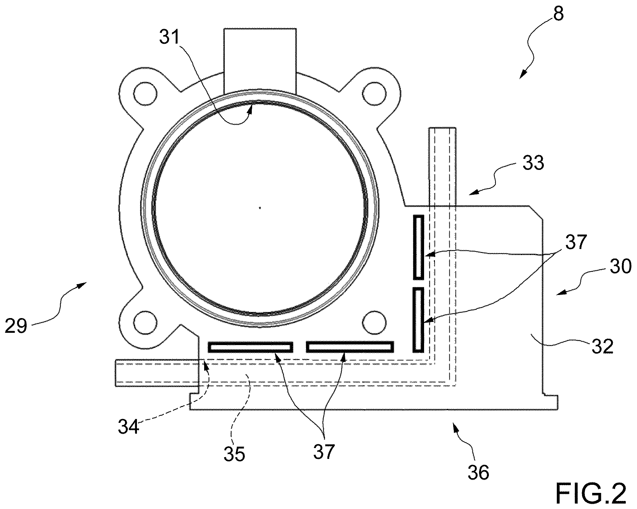

As shown in Figure 2, the electronically controlled throttle valve 8 comprises a valve body 29 housing an electric engine 30, a tubular feeding pipe 31 having a circular cross section through which the air sucked in from the internal combustion engine flows, and a throttle plate (not shown), which is circular in shape, engages the feeding pipe 31 and rotates between an open position and a closed position of the feeding pipe 31 due to the action of an actuator device.

The electric engine 30 has a cylindrical body, which is arranged in a tubular housing 32 of the valve body 29 arranged next to the feeding pipe 31. The valve body 29 consists entirely of a first material, internally defining the feeding pipe 31, and comprises, among other things, the tubular housing 32 which is arranged next to the feeding pipe 31 and houses the electric engine 30. According to a preferred embodiment, the material that constitutes the valve body 29 is a metal material, in particular aluminium. Lastly, the valve body 29 comprises a conditioning circuit 33 as described, for example, in patent applications EP2921687 and BO2014A000349, which are entirely incorporated herein by reference. In particular, the conditioning circuit 33 in turn comprises a channel 34 and a pipe 35. The channel 34 is substantially L-shaped and surrounds the feeding pipe 31 on two sides. The inside of the channel 34 houses the pipe 35, which is also substantially L-shaped and is made of steel, preferably a stainless steel. The pipe 35 is in hydraulic communication with a pump (not shown), which circulates the conditioning fluid and supplies it to the pipe 35 for the conditioning of the different parts of the throttle valve 8. It clearly appears that the conditioning circuit 33 may alternatively have a different shape from the substantially L shape described above.

Lastly, the throttle valve 8 comprises a thermoelectric conversion device 36. In particular, the thermoelectric conversion device 36 comprises a plurality of Peltier coolers 37. As is known, the operation of the Peltier coolers 37 provides for exploiting a thermoelectric effect whereby, in a circuit comprising metal conductors, electricity is generated due to a temperature difference ΔT. By heating one side of the reversible Peltier cooler 37 (the "hot side") and cooling the other side (the "cold side") in an electrical circuit connected to the terminals of the Peltier coolers 37, a current will flow which is proportional to the temperature difference ΔT between the hot side and the cold side. The Peltier coolers 37 can then be used as a generator of electrical energy.

Each Peltier cooler 37 comprises a very thin plate provided with a surface that faces the hot side and a surface that faces the cold side. Typically, the plate is formed by two semiconductor materials mutually connected by a layer of electrically conductive material, preferably copper. The plate has, in plan view, a preferably square shape. According to a preferred embodiment, the surface that faces the hot side can withstand temperatures up to approximately 200°C, whereas the surface that faces the cold side is at temperatures between 30°C and 90°C.

According to a preferred embodiment, the plate is of the insulated type and namely has a lower cladding layer and an upper cladding layer, made of an electrically insulating material, preferably ceramic, capable of optimising the efficiency of the Peltier cooler.

The potential difference at the terminals of each Peltier cooler 37 is obtained thanks to the temperature gradient ΔT, because the two metals generate different electric potentials at the two sides having different temperatures, giving rise to a current flow which produces a magnetic field.

Clearly, the efficiency of the Peltier coolers 37 is at a maximum when the difference between the hot side and the cold side is very high. For this reason, the Peltier coolers 37 are housed in respective seats made in the valve body 29, and comprise a hot side, which is thermally coupled to a surface delimiting the hot zone from which to extract heat in the area of the feeding pipe 31, and a cold side, which is thermally coupled to a surface in the area of the conditioning circuit 33. Therefore, the Peltier coolers 37 can be taken as generators of electrical energy to assist in the charging process of a battery of the vehicle.

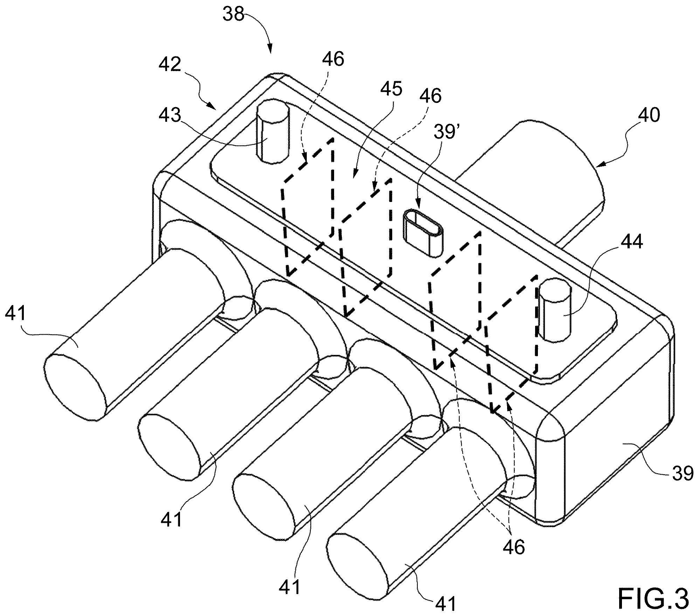

Figure 3 illustrates a module 38 which incorporates on the inside the intake manifold 4 and the intercooler 9. In particular, the module 38 comprises a central body 39 made of any thermoplastic material capable of withstanding temperatures in the range of 210 - 215°C. The central body 39 has a substantially parallelepiped shape and internally defines the intake manifold 4 for collecting the air coming from the supercharger 14 to be fed to the four cylinders 3. The central body 39 comprises an inlet opening 40 for the intake of fresh air, which communicates with the intake pipe 6, so as to inject the fresh air coming from the supercharger 14 into the central body 39.

The intercooler 9, whose function is to cool the fresh air sucked from the supercharger 14, is defined inside the central body 39. The intercooler 9 substantially consists of an air/water heat exchanger, wherein the air sucked from the intake pipe 6 (i.e., coming from the supercharger 14) enters at a temperature of about 200°C. The fresh air sucked from the intake pipe 6 is cooled to approximately 50°C and leaves the central body 39 through four pipes 41, each of which is associated with a respective cylinder 3 and along which their respective intake valves (not shown) are arranged. The pipes 41 are formed at a major side wall of the central body 39 opposite to the major side wall in which the inlet opening 40 is formed.

The central body 31 is then provided with a cooling hydraulic circuit 42 supplied with a cooling fluid, which enters the central body 39 through an inlet pipe 43, is fed into said central body 39, and exits through an outlet pipe 44; both the inlet pipe 43 and the outlet pipe 44 are formed at an upper wall of the central body 39.

The module 38 also comprises a thermoelectric conversion device 45. In particular, the thermoelectric conversion device 45 comprises a plurality of Peltier coolers 46, whose operation is entirely similar to that described in the foregoing discussion on the Peltier coolers 37. The Peltier coolers 46 comprise a hot side that is hit by the flow of air sucked from the intake pipe 6, which defines the hot zone from which to extract heat, and a cold side, which is thermally coupled to a surface in the area of the cooling hydraulic circuit 42. The Peltier coolers 46 are housed in the central body 39 with an orientation parallel to a minor side wall of the central body 39 itself. In this case too, therefore, the Peltier coolers 37 can be taken as generators of electrical energy to assist in the charging process of a battery of the vehicle. The central body 39 is also provided with an electrical connector 39' in order to achieve the electrical connection of the thermoelectric conversion device 45.

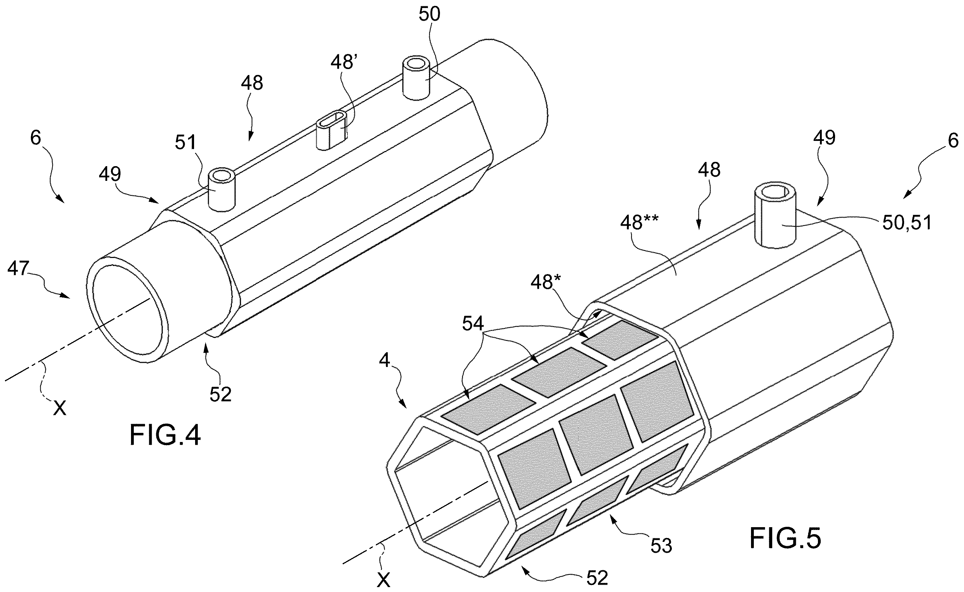

Figures 3 and 4 show a segment 47 of the intake pipe 6, which connects the supercharger 14 to the throttle valve 8 with cylindrical symmetry around an axis X. The segment 47 is provided with an outer jacket 48 coaxial with the axis X and defined by a tubular body having, in its cross section, a polygonal (in particular, hexagonal) shape inside which a conditioning circuit 49 is defined. The conditioning circuit 49 is supplied with a cooling fluid, which enters the jacket 48 through an inlet pipe 50, flows inside the jacket 48 (in particular, inside a chamber defined between a lower wall 48* and an upper wall 48** of the jacket 48), and exits through an outlet pipe 51. Furthermore, the segment 47 is provided with an inner jacket 52 coaxial with the axis X, interposed between the outer jacket 48 and the segment 47, is defined by a tubular body having, in its cross section, a polygonal (in particular, hexagonal) shape complementary to the shape of the outer jacket 48.

The inner jacket 52 also comprises a thermoelectric conversion device 53. In particular, the thermoelectric conversion device 53 comprises a plurality of Peltier coolers 54, whose operation is entirely similar to that described in the foregoing discussion on the Peltier coolers 37. Each Peltier cooler 54 comprises a very thin plate provided with a surface that faces the hot side and a surface that faces the cold side, and arranged next to one another, so as to define the polygonal profile of the inner jacket 52. The Peltier coolers 54 comprise a hot side, which is thermally coupled to a surface delimiting the hot zone from which to extract heat in the area of the segment 47, and a cold side, which is thermally coupled to a surface in the area of the outer jacket 48. Therefore, the Peltier coolers 37 can be taken as generators of electrical energy to assist in the charging process of a battery of the vehicle. The outer jacket 48 is also provided with an electrical connector 48' in order to achieve the electrical connection of the thermoelectric conversion device 53.

It clearly appears that the thermoelectric conversion devices 36, 45, 53 may find advantageous application in any component or combination of components of the circuit portion that allows to exploit the temperature differences between the heat of the air flow exiting the supercharger 14 (approximately 200°C) and the cooling fluid of the internal combustion engine 1 or other circuit conditioning fluids (30°C - 90°C). According to a preferred modification, while the components described in the foregoing discussion (throttle valve 8, intake manifold 4 and segment 47) are provided with respective conditioning circuits indicated by 33, 42 and 49, the thermoelectric conversion devices 36, 45, 53 may find advantageous application also in the absence of said conditioning circuits.

It also clearly appears that the supercharged internal combustion engine 1, according to alternative embodiments, can be provided with any number of thermoelectric conversion devices 36, 45, 53 described in the foregoing discussion, which can be used individually or in combination in the supercharged internal combustion engine 1.

The components herein described so far have certain advantages. In particular, although not cheap to produce, the application of the thermoelectric conversion devices 36, 45, 53 to the throttle valve 8, intake manifold 4 and segment 47 of the intake pipe 6 allows to recover the electric energy required for the charging process of the battery of the vehicle, while eliminating the alternator, which is a rather expensive and bulky component.

## Claims

1. An intake pipe (6) for an internal combustion engine (1) supercharged by means of a turbocharger (12) provided with a turbine (13) and a supercharger (14), wherein the intake pipe (6) connects the supercharger (14) to an intake manifold (4); the intake manifold (4) is supplied with a flow of air sucked from the supercharger (14) and controlled by a throttle valve (8) and is connected to a plurality of cylinders (3); wherein at least a segment (47) of the intake pipe (6) is provided with a thermoelectric conversion device (53) comprising a number of Peltier coolers (54) and designed to exploit the heat of the air flow exiting the supercharger (14); and wherein the segment (47) of the intake pipe (6) is provided with an inner jacket (52) coaxial with the segment (47) itself, wherein the inner jacket (52) comprises a plurality of Peltier coolers (54) comprising a hot side thermally coupled to a surface delimiting the hot zone from which to extract heat in the area of said segment (47).

2. The pipe according to claim 1, wherein the segment (47) of the intake pipe (6) comprises an outer jacket (48), which is coaxial with the segment (47) and has, defined on the inside, a conditioning circuit (49); wherein the inner jacket (52) is interposed between the segment (47) and the outer jacket (48), and the Peltier coolers (54) comprise a cold side, which is thermally coupled to a surface in the area of the outer jacket (48).

3. The pipe according to claim 2, wherein the Peltier coolers (54) are arranged next to one another and the inner jacket (52) has, in its cross section, a polygonal profile; wherein the outer jacket (48) has, in its cross section, a profile that is complementary to the profile of the inner jacket (52).

4. An internal combustion engine (1) supercharged by means of a turbocharger (12) provided with a turbine (13) and a supercharger (14) and comprising an intake pipe (6) connecting the supercharger (14) to an intake manifold (4), which is supplied with a flow of air sucked from the supercharger (14) and controlled by a throttle valve (8), and is connected to a plurality of cylinders (3); wherein the intake pipe (6) is made according to any one of claims 1 to 3.

5. The engine according to claim 4, wherein the intake manifold (4) comprises a central body (39), which is supplied with a flow of air sucked from the supercharger (14) and is provided with a thermoelectric conversion device (45) comprising a number of Peltier coolers (46) and designed to exploit the heat of the air flow exiting the supercharger (14).

6. The engine according to claim 5, wherein the intake manifold (4) houses on the inside an air/water conditioning circuit (42) to cool the flow of air sucked from the supercharger (14); and wherein the Peltier coolers (46) are housed on the inside of the central body (39) and comprise a hot side that is hit by the flow of air sucked from the supercharger (14), which defines the hot zone from which to extract heat, and a cold side that is thermally coupled in the area of the conditioning circuit (42).

7. The engine according to any one of claims 4 to 6, wherein the throttle valve (8) comprises a valve body (29), a tubular feeding pipe (31) defined in the valve body (29) and through which the air sucked in from the internal combustion engine coming from the supercharger (14) flows, and a thermoelectric conversion device (36) comprising a number of Peltier coolers (37) and designed to exploit the heat of the air flow exiting the supercharger (14).

8. The engine according to claim 7, wherein the Peltier coolers (37) are housed in respective seats made in the valve body (29) and comprise a hot side, which is thermally coupled to a surface delimiting the hot zone from which to extract heat in the area of the feeding pipe (31).

9. The engine according to claim 7 or 8, wherein the throttle valve (8) comprises an actuator device (30) and a conditioning circuit (33) for the actuator device (30), which is defined in the valve body (29); wherein the Peltier coolers (37) are housed in respective seats made in the valve body (29) close to the conditioning circuit (33), and they comprise a cold side, which is thermally coupled to a surface in the area of the conditioning circuit (33).

## Patentansprüche

1. Ansaugleitung (6) für eine Brennkraftmaschine (1), die mittels eines Turboladers (12) aufgeladen wird, der eine Turbine (13) und einen Kompressor (14) umfasst, wobei die Ansaugleitung (6) den Kompressor (14) mit einem Ansaugkrümmer (4) verbindet; der Ansaugkrümmer (4) wird mit einem von dem Kompressor (14) angesaugten und mittels einer Drosselklappe (8) geregelten Luftstrom versorgt und ist mit einer Vielzahl von Zylindern (3) verbunden; wobei mindestens ein Abschnitt (47) der Ansaugleitung (6) mit einer thermoelektrischen Umwandlungsvorrichtung (53) versehen ist, die mehrere Peltier-Kühler (54) umfasst und dazu dient, die Wärme des aus dem Kompressor (14) austretenden Luftstroms zu verwerten; wobei der Abschnitt (47) der Ansaugleitung (6) mit einem Innenmantel (52) versehen ist, der koaxial zu dem Abschnitt (47) angeordnet ist und eine Vielzahl von Peltier-Kühlern (54) umfasst, die eine Heißseite aufweisen, welche mit einer Fläche thermisch verbunden ist, welche die Heißzone begrenzt, aus der Wärme in den Bereich des Abschnitts (47) geleitet wird.

2. Ansaugleitung nach Anspruch 1, wobei der Abschnitt (47) der Ansaugleitung (6) einen koaxial zu dem Abschnitt (47) angeordneten Außenmantel (48) umfasst, der einen innenseitig abgegrenzten Klimatisierungskreislauf (49) aufweist; wobei der Innenmantel (52) zwischen dem Abschnitt (47) und dem Außenmantel (48) angeordnet ist und die Peltier-Kühler (54) eine Kaltseite aufweisen, die mit einer Fläche in dem Bereich des Außenmantels (48) thermisch verbunden ist.

3. Ansaugleitung nach Anspruch 2, wobei die Peltier-Kühler (54) nebeneinander angeordnet sind und der Innenmantel (52) in seinem Querschnitt ein polygonales Profil aufweist; wobei der Außenmantel (48) in seinem Querschnitt ein Profil aufweist, welches das Profil des Innenmantels (52) ergänzt.

4. Brennkraftmaschine (1), die mittels eines eine Turbine (13) und einen Kompressor (14) umfassenden Turboladers (12) aufgeladen wird und die eine Ansaugleitung (6) umfasst, welche den Kompressor (14) mit einem Ansaugkrümmer (4) verbindet, der mit einem von dem Kompressor (14) angesaugten und mittels einer Drosselklappe (8) geregelten Luftstrom versorgt wird und mit einer Vielzahl von Zylindern (3) verbunden ist; wobei die Ansaugleitung (6) nach einem der vorstehenden Ansprüche 1 bis 3 ausgeführt ist.

5. Brennkraftmaschine (1) nach Anspruch 4, wobei der Ansaugkrümmer (4) einen Mittelkörper (39) umfasst, der mit einem von dem Kompressor (14) angesaugten Luftstrom versorgt wird und mit einer thermoelektrischen Umwandlungsvorrichtung (45) versehen ist, die mehrere Peltier-Kühler (46) umfasst und dazu dient, die Wärme des aus dem Kompressor (14) austretenden Luftstroms zu verwerten.

6. Brennkraftmaschine (1) nach Anspruch 5, wobei im Inneren des Ansaugkrümmers (4) zur Kühlung des von dem Kompressor (14) angesaugten Luftstroms ein Luft/Wasser-Klimatisierungskreislauf untergebracht ist und die Peltier-Kühler (46) im Inneren des Mittelkörpers (39) untergebracht sind und eine Heißseite aufweisen, auf die der von dem Kompressor (14) angesaugte Luftstrom trifft und welche die Heißzone begrenzt, der Wärme entzogen wird, sowie eine Kaltseite, die in dem Bereich des Klimatisierungskreislaufs thermisch verbunden ist.

7. Brennkraftmaschine (1) nach einem der Ansprüche 4 bis 6, wobei die Drosselklappe (8) einen Klappenkörper (29), eine in dem Klappenkörper (29) abgegrenzte röhrenförmige Zuleitung (31), durch welche die von der Brennkraftmaschine angesaugte, von dem Kompressor (14) kommende Luft strömt, und eine thermoelektrische Umwandlungsvorrichtung (36) umfasst, die wiederum mehrere Peltier-Kühler (37) umfasst und dazu dient, die Wärme des aus dem Kompressor (14) austretenden Luftstroms zu verwerten.

8. Brennkraftmaschine (1) nach Anspruch 7, wobei die Peltier-Kühler (37) in entsprechenden, in dem Klappenkörper (29) ausgebildeten Passungen untergebracht sind und eine Heißseite aufweisen, die mit einer Fläche, welche die Heißzone begrenzt, aus der Wärme in den Bereich der Zuleitung (31) geleitet wird, thermisch verbunden sind.

9. Brennkraftmaschine (1) nach Anspruch 7 oder 8, wobei die Drosselklappe (8) eine Aktuatorvorrichtung (30) und einen Klimatisierungskreislauf (33) für die Aktuatorvorrichtung (30) umfasst, die in dem Klappenkörper (29) abgegrenzt ist; wobei die Peltier-Kühler (37) in entsprechenden, in dem Klappenkörper (29) nahe dem Klimatisierungskreislauf (33) ausgebildeten Passungen untergebracht sind und eine Kaltseite aufweisen, die mit einer Fläche in dem Bereich des Klimatisierungskreislaufs (33) thermisch verbunden ist.

## Revendications

1. Conduite d'admission (6) pour un moteur à combustion interne (1) suralimenté à l'aide d'un turbocompresseur (12) pourvu d'une turbine (13) et d'un compresseur de suralimentation (14), dans laquelle la conduite d'admission (6) raccorde le compresseur de suralimentation (14) à un collecteur d'admission (4) ; le collecteur d'admission (4) est alimenté en un écoulement d'air aspiré depuis le compresseur de suralimentation (14) et commandé par un papillon des gaz (8) et est raccordée à une pluralité de cylindres (3) ; dans laquelle au moins un segment (47) de la conduite d'admission (6) est pourvue d'un dispositif de conversion thermoélectrique (53) comprenant un certain nombre de refroidisseurs Peltier (54) et conçu pour exploiter la chaleur de l'écoulement d'air quittant le compresseur de suralimentation (14) ; et dans laquelle le segment (47) de la conduite d'admission (6) est pourvu d'une chemise intérieure (52) coaxiale avec le segment (47) lui-même, dans laquelle la chemise intérieure (52) comprend une pluralité de refroidisseurs Peltier (54) comprenant un côté chaud thermiquement couplé à une surface délimitant la zone chaude d'où extraire la chaleur dans la région dudit segment (47).

2. Conduite selon la revendication 1, dans laquelle le segment (47) de la conduite d'admission (6) comprend une chemise extérieure (48), qui est coaxiale avec le segment (47) et comporte, défini sur l'intérieur, un circuit de conditionnement (49) ; dans laquelle la chemise intérieure (52) est interposée entre le segment (47) et la chemise extérieure (48), et les refroidisseurs Peltier (54) comprennent un côté froid, qui est thermiquement couplé à une surface dans la région de la chemise extérieure (48).

3. Conduite selon la revendication 2, dans laquelle les refroidisseurs Peltier (54) sont agencés les uns à côté des autres et la chemise intérieure (52) présente, dans sa section transversale, un profil polygonal ; dans laquelle la chemise extérieure (48) a, dans sa section transversale, un profil qui est complémentaire du profil de la chemise de la chemise intérieure (52).

4. Moteur à combustion interne (1) suralimenté à l'aide d'un turbocompresseur (12) pourvu d'une turbine (13) et d'un compresseur de suralimentation (14) et comprenant une conduite d'admission (6) raccordant le compresseur de suralimentation (14) à un collecteur d'admission (4), qui est alimenté en un écoulement d'air aspiré depuis le compresseur de suralimentation (14) et commandé par un papillon des gaz (8), et est raccordée à une pluralité de cylindres (3) ; dans lequel la conduite d'admission (6) est faite selon l'une quelconque des revendications 1 à 3.

5. Moteur selon la revendication 4, dans lequel le collecteur d'admission (4) comprend un corps central (39), qui est alimenté en un écoulement d'air aspiré depuis le compresseur de suralimentation (14) et est pourvu d'un dispositif de conversion thermoélectrique (45) comprenant un nombre de refroidisseurs Peltier (46) et conçu pour exploiter la chaleur de l'écoulement d'air sortant du compresseur de suralimentation (14).

6. Moteur selon la revendication 5, dans lequel le collecteur d'admission (4) loge sur l'intérieur un circuit de conditionnement d'air/eau (42) pour refroidir l'écoulement d'air aspiré depuis le compresseur de suralimentation (14) ; et dans lequel les refroidisseurs Peltier (46) sont logés sur l'intérieur du corps central (39) et comprennent un côté chaud qui est frappé par l'écoulement d'air aspiré depuis le compresseur de suralimentation (14), qui délimite la zone chaude d'où extraire la chaleur, et un côté froid qui est thermiquement couplé dans la région du circuit de conditionnement (42).

7. Moteur selon l'une quelconque des revendications 4 à 6, dans lequel le papillon des gaz (8) comprend un corps (29) de papillon, une conduite d'acheminement tubulaire (31) délimitée dans le corps (29) de papillon et à travers laquelle l'air aspiré depuis le moteur à combustion interne en provenance du compresseur de suralimentation (14) s'écoule, et un dispositif de conversion thermoélectrique (36) comprenant un nombre de refroidisseurs Peltier (37) et conçu pour exploiter la chaleur de l'écoulement d'air sortant du compresseur de suralimentation (14).

8. Moteur selon la revendication 7, dans lequel les refroidisseurs Peltier (37) sont logés dans des sièges respectifs créés dans le corps (29) de papillon et comprennent un côté chaud, qui est thermiquement couplé à une surface délimitant la zone chaude d'où extraire la chaleur dans la région de la conduite d'acheminement (31).

9. Moteur selon la revendication 7 ou 8, dans lequel le papillon des gaz (8) comprend un dispositif actionneur (30) et un circuit de conditionnement (33) pour le dispositif actionneur (30), qui est délimité dans le corps (29) de papillon ; dans lequel les refroidisseurs Peltier (37) sont logés dans des sièges respectifs créés dans le corps (29) de papillon proches du circuit de conditionnement (33), et ils comprennent un côté froid, qui est thermiquement couplé à une surface dans la région du circuit de conditionnement (33).
